**Europäisches Patentamt**

**European Patent Office**

**Office européen des brevets**

(19)

(11) Veröffentlichungsnummer: **0 174 385**
**B1**

(12) **EUROPÄISCHE PATENTSCHRIFT**

(45) Veröffentlichungstag der Patentschrift:
18.05.88

(21) Anmeldenummer: 84110862.4

(22) Anmeldetag: 12.09.84

(51) Int. Cl.⁴: **H 01 F 27/30**, H 02 B 1/20

(54) Halterung für elektrische Leitungen.

(43) Veröffentlichungstag der Anmeldung:
19.03.86 Patentblatt 86/12

(45) Bekanntmachung des Hinweises auf die Patenterteilung:
18.05.88 Patentblatt 88/20

(84) Benannte Vertragsstaaten:
AT CH DE FR GB IT LI SE

(56) Entgegenhaltungen:
FR-A-987 516
FR-A-1 287 983
FR-A-2 513 431

(73) Patentinhaber: H. Weidmann AG, Neue Jonastrasse 60, CH- 8640 Rapperswil (CH)

(72) Erfinder: Potocnik, Otto, Frohbergstrasse 17, CH- 8645 Jona (CH)

(74) Vertreter: Tetzner, Volkmar, Dr.- Ing. Dr. jur., Van- Gogh- Strasse 3, D-8000 München 71 (DE)

LIBER, STOCKHOLM 1988

## Beschreibung

Die Erfindung betrifft eine Isolierstoff-Halterung (entsprechend dem Oberbegriff des Anspruches 1) für elektrische Leitungen in Hochspannungsgeräten.

Elektrische Leitungen in Hochspannungsgeräten, beispielsweise Verbindungen in flüssigkeitsgefüllten Transformatoren und Drosseln, die Spulenanfänge oder Anzapfungen mit Schaltern, Durchführungen oder anderen Bauteilen, wie Stromwandlern, verbinden, sind im Betrieb und insbesondere im Kurzschlußfall hohen mechanischen Kräften und bei Überspannungen, wie Blitzstoß, hohen elektrischen Beanspruchungen ausgesetzt.

Die zur Fixierung dieser elektrischen Leitungen erforderlichen Isolierstoff-Halterungen werden vielfach individuell für jeden Transformator oder jede Drossel am Reißbrett konstruiert und dann aus Holz, Schichtholz oder Transformerboard gefertigt. Eine solche auf den Einzelfall zugeschnittene Sonderanfertigung der Isolierstoff-Halterungen ist außerordentlich aufwendig und führt zu unerwünscht langen Lieferzeiten.

Durch die FR-A-2 513 431 ist ferner eine Isolierstoff-Halterung entsprechend dem Oberbegriff des Anspruches 1 bekannt. Die Spannklötze sind hierbei keilförmig ausgebildet und werden in schwalbenschwanzförmige Nuten der Längs- und Querträger eingesetzt.

Durch die FR-A-1 287 983 ist ferner eine variable Halterungskonstruktion für Rohre bekannt, bei der an den Kreuzungspunkten die senkrecht zueinander angeordneten Stangen in relativ aufwendige quaderförmige Spannklötze eingespannt sind.

Der Erfindung liegt die Aufgabe zugrunde, eine Isolierstoff-Halterung der im Oberbegriff des Anspruches 1 vorausgesetzten Art zu schaffen, die sich durch universelle Verwendbarkeit auszeichnet und die es damit gestattet, dieselben Elemente der Halterung für die unterschiedlichsten Bedarfsfälle einzusetzen.

Diese Aufgabe wird erfindungsgemäß durch die kennzeichnenden Merkmale des Anspruches 1 gelöst.

Zweckmäßige Ausgestaltungen der Erfindung sind Gegenstand der Unteransprüche.

Die Erfindung wird im folgenden anhand einiger Ausführungsbeispiele näher erläutert. In der Zeichnung zeigen

Fig. 1 eine schematische Teilansicht einer Leitungsverbindung in einem Transformator,

Fig. 2 einen Teilschnitt längs der Linie II-II der Fig. 1,

Fig. 3 eine Perspektivansicht eines Spannklotzes,

Fig. 4 eine Perspektivansicht eines Knotenpunktes,

Fig. 5 einen Teilschnitt durch eine Abwandlung des ersten Ausführungsbeispieles der Figuren 1 bis 4,

Fig. 6 einen Schnitt (entsprechend Fig. 2) durch ein zweites Ausführungsbeispiel,

Fig. 7 eine Ansicht in Richtung VII-VII der Fig. 6,

Fig. 8 u. 9 Perspektivansichten des Spannklotzes und des Knotenpunktes der Ausführung gemäß den Figuren 6 und 7,

Fig. 10 einen Schnitt (entsprechend Fig. 2) durch ein drittes Ausführungsbeispiel,

Fig. 11 u. 12 Ansicht bzw. Schnitt längs der Linien XI-XI bzw XII-XII,

Fig. 13 u. 14 Perspektivansichten des Spannklotzes und des Knotenpunktes des Ausführungsbeispieles der Figuren 10 bis 12.

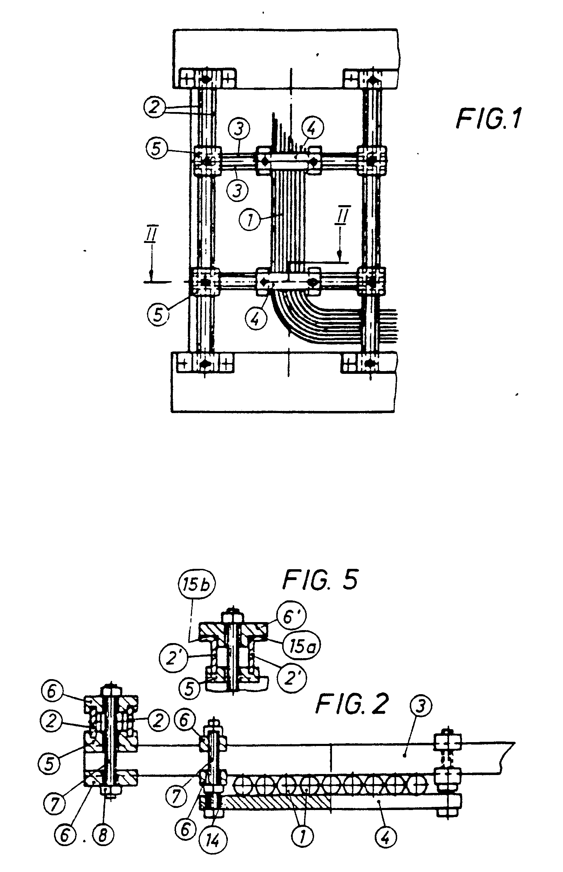

Die erfindungsgemäße Isolierstoff-Halterung für elektrische Leitungen eines Hochspannungsgerätes, beispielsweise für die Leitungen 1 des in Fig. 1 in einem kleinen Ausschnitt dargestellten Dreiphasen-Reguliertransformators, enthält im wesentlichen Längsträger 2, Querträger 3, Leitungsträger 4, Spannklötze 5, weitere Spannklötze 6, Schrauben 7 und Muttern 8. Alle vorstehend genannten Teile der Isolierstoff-Halterung bestehen zweckmäßig aus Transformerboard, das vorzugsweise voll imprägnierbar ist.

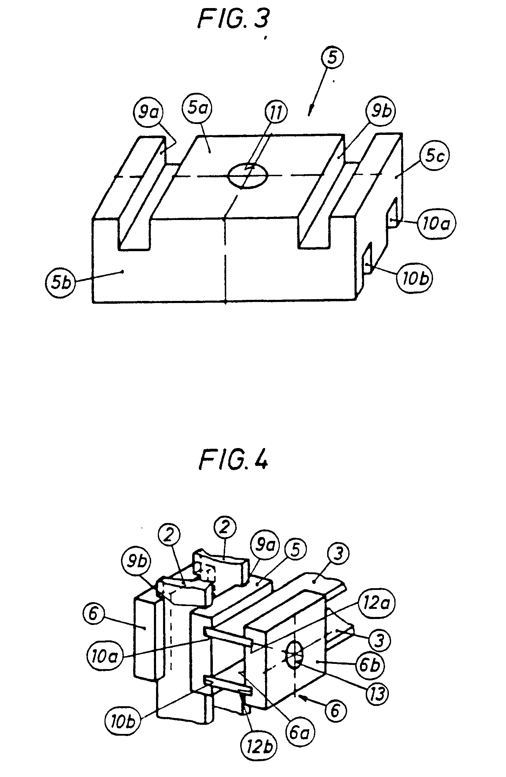

Fig. 3 zeigt für die in den Figuren 1 bis 5 veranschaulichte erste Variante der Erfindung den Aufbau der Spannklötze 5.

Die Spannklötze 5 sind quaderförmig gestaltet und besitzen sechs Außenseiten, von denen in Fig. 3 die erste Außenseite 5a, die dritte Außenseite 5b und die fünfte Außenseite 5c sichtbar sind. An der ersten Außenseite 5a sind zwei durchgehende Nuten 9a, 9b vorgesehen, die an der dritten Außenseite ausmünden. Die der ersten Außenseite 5a gegenüberliegende zweite Außenseite des Spannklotzes 5 ist mit zwei durchgehenden Nuten 10a, 10b versehen, die an der fünften Außenseite 5c und der gegenüberliegenden sechsten Außenseite des Spannklotzes 5 ausmünden.

Bei dem in Fig. 3 dargestellten Ausführungsbeispiel verlaufen die Nuten 9a, 9b an der ersten Außenseite 5a des Spannklotzes 5 rechtwinklig zu den Nuten 10a, 10b an der gegenüberliegenden zweiten Außenseite des Spannklotzes. Der Spannklotz 5 ist ferner mit einer von der ersten Außenseite 5a bis zur gegenüberliegenden zweiten Außenseite durchgehenden Bohrung 11 versehen, die zwischen den auf derselben Außenseite befindlichen Nuten 9a, 9b bzw. 10a, 10b vorzugsweise im Zentrum des Spannklotzes 5 angeordnet ist. Die Nuten 9a, 9b und 10a, 10b dienen - wie noch näher erläutert wird - zur formschlüssigen Aufnahme der Längsträger 2 und der Querträger 3, während die Bohrung 11 zum Durchgriff einer Schraube 7 bestimmt ist.

Die weiteren Spannklötze 6 (vgl. insbesondere Fig. 4) sind nur an einer Außenseite 6a mit Nuten 12a, 12b versehen, während die gegenüberliegende Außenseite 6b plan ausgebildet ist. Auch diese weiteren Spannklötze 6 sind mit einer durchgehenden Bohrung 13 versehen.

Aus den Fig. 2 und 4 ist damit die Ausbildung eines Knotenpunktes der erfindungsgemäßen Isolierstoff-Halterung zu erkennen: In die Nuten 9a, 9b des Spannklotzes 5 greifen formschlüssig die Längsträger 2 ein, während die Querträger 3 von den Nuten 10a, 10b auf der gegenüberliegenden Außenseite des Spannklotzes 5 aufgenommen werden. Die äußere Abstützung der Längsträger 2 und der Querträger 3 erfolgt durch die weiteren Spannklötze 6. Alle drei Spannklötze werden durch eine (in Fig. 4 nicht dargestellte) Schraube 7 mit Muttern 8 zusammengehalten.

Man erkennt aus der Darstellung der Fig. 4, daß der Knotenpunkt auf einfache Weise in Richtung der Längsträger 2 oder in Richtung der Querträger 3 verschoben werden kann, um die Lage des Knotenpunktes dem jeweiligen Anwendungsfall optimal anpassen zu können.

Aus den Fig. 1 und 2 ist weiterhin erkennbar, wie die Leitungen 1 mittels eines Leitungsträgers 4 an den Querträgern 3 festgelegt werden. Der Leitungsträger 4 ist eine Schiene, die an ihren beiden Enden mit einer Bohrung 14 zur Aufnahme einer Schraube 7 versehen ist. Zur Halterung dieser Schraube 7 an den Querträgern 3 dienen zwei Spannklötze 6, deren Gestaltung anhand von Fig. 4 bereits erläutert wurde.

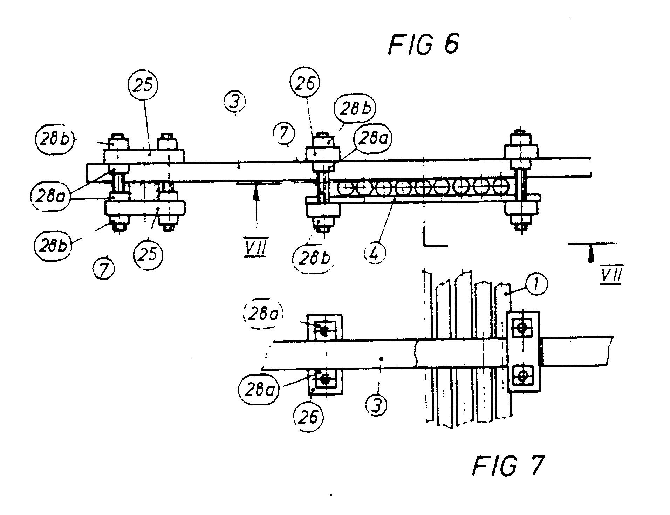

Bei dem anhand der Fig. 1 bis 4 erläuterten Ausführungsbeispiel besitzen die schienenförmigen Längsträger 2 und Querträger 3 ein Rechteckprofil. Fig. 5 zeigt demgegenüber eine Variante, bei der die Längsträger 2' ein L-förmiges Winkelprofil aufweisen, wobei in diesem Falle die Spannklötze 6' mit zwei winkelförmigen Ausnehmungen 15a, 15b versehen sind, die die kurzen Schenkel der L-förmigen Längsträger 2' formschlüssig aufnehmen. Längsträger 2' von L-förmigem Winkelprofil, die als Vertikalträger eingesetzt werden, ermöglichen die Erzielung größerer Biegefestigkeiten bei entsprechender Beanspruchung der horizontal angeordneten Querträger.

Ebenso wie die Knotenpunkte der Längs- und Querträger können auch die Halterungsstellen der elektrischen Leitungen mit Hilfe der Spannklötze stufenlos verschoben und in jeder gewünschten Lage mit Hilfe der Schrauben und Muttern fixiert werden. Die wenigen notwendigen Einzelteile der erfindungsgemäßen Isolierstoff-Halterung können in einigen Standardabmessungen vorrätig gehalten werden, so daß mit wenigen Bauteilen alle mechanischen und elektrischen Forderungen erfüllt werden können. Die für die verschiedensten Anwendungszwecke verwendbaren Bauteile können dabei auf Lager gelegt werden und sind damit kurzfristig verfügbar.

Wird als Material Transformerboard verwendet, das vollimprägniert werden kann, so ist ein Einsatz bis zu den höchsten Spannungen möglich.

Wenngleich in Fig. 1 nur eine Festlegung der Leitungen 1 an Querträgern 3 dargestellt ist, so ist es im Rahmen der Erfindung selbstverständlich auch möglich, in ganz entsprechender Weise und mit denselben Bauteilen die elektrischen Leitungen an Längsträgern 2 zu fixieren.

Etwa erforderliche Umbauten lassen sich mit der erfindungsgemäßen Isolierstoff-Halterung mühelos durchführen, da die Verteilung und Abstände der Knotenpunkte ebenso wie die Lage der Leitungs-Klemmstellen frei gewählt und jederzeit ohne Schwierigkeit verändert werden können.

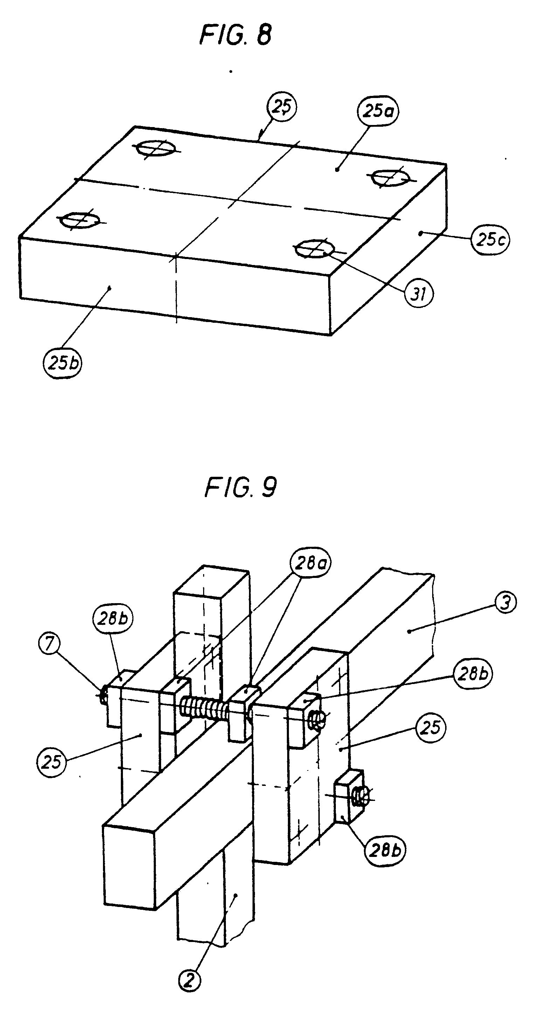

Bei dem in den Fig. 6 bis 9 dargestellten weiteren Ausführungsbeispiel sind die Spannklötze 25 an wenigstens zwei diagonal einander gegenüberliegenden Ecken - vorzugsweise im Bereich aller vier Ecken - mit Bohrungen 31 versehen, die von der ersten Außenseite 25a zur gegenüberliegenden zweiten Außenseite durchgehen. Von dem quaderförmigen Spannklotz 25 sind in Fig. 8 weiterhin die dritte Außenseite 25b und die fünfte Außenseite 25c sichtbar.

Der Abstand dieser Bohrungen 31 ist so bemessen, daß unter Berücksichtigung der Dimensionierung von auf den Schrauben 7 zwischen zwei Spannklötzen 25 angeordneten Vierkantmuttern 28a (vgl. Fig. 9) die Längs- und Querträger 2, 3 formschlüssig zwischen diese Muttern 28a eingreifen. Die Bohrungen 31 sind also derart in den Spannklötzen 25 angeordnet, daß eine halbe Breite der Muttern 28a sowie eine halbe Breite der Längs- bzw. Querträger 2, 3 gerade den Abstand der Bohrung 31 von der Mittelebene des Spannklotzes 25 ergibt. Auf diese Weise können im Bereich eines Knotenpunktes (vgl. Fig. 9) die beiden sich kreuzenden Träger 2, 3 mit Hilfe von lediglich zwei Schrauben und vier zwischen den beiden Spannklötzen 25 auf die Schrauben 7 aufgesetzten Muttern 28a in ihrer Lage einwandfrei fixiert werden. Das Zusammenspannen der beiden Spannklötze 25 erfolgt über äußere Muttern 28b.

Zur Befestigung der Leitungen 1 mittels der Leitungsträger 9 sind auch bei dem Ausführungsbeispiel der Figuren 6 bis 9 weitere quaderförmige Spannklötze 26 vorgesehen, die zwei durchgehende Bohrungen aufweisen. Der Abstand dieser Bohrungen ist derart bemessen, daß - unter Berücksichtigung der Dimensionierung der zwischen zwei Spannklötzen angeordneten Vierkantmuttern 28a - die Querträger 3 formschlüssig zwischen diese Muttern 28a eingreifen (vgl. Fig. 6 und 7).

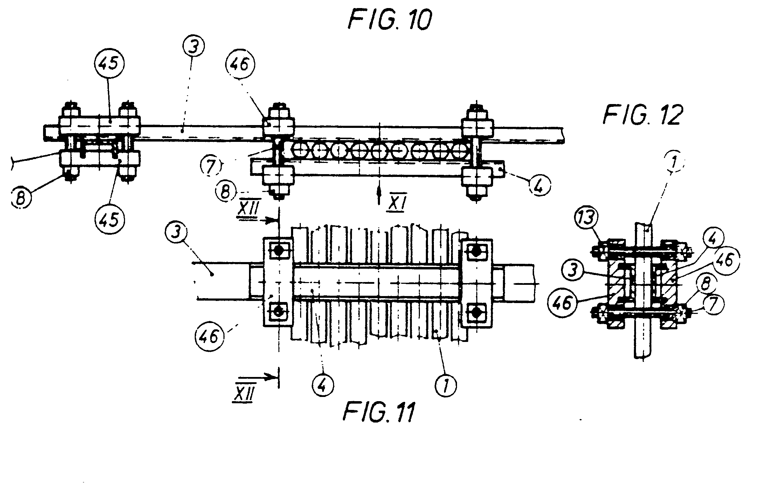

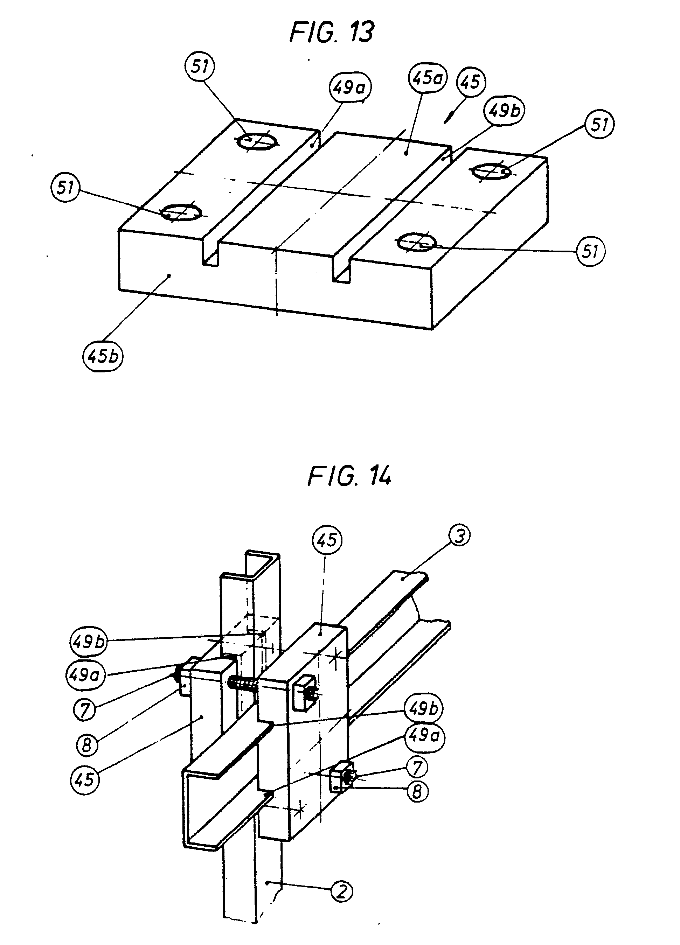

Bei dem in den Figuren 10 bis 14 dargestellten weiteren Ausführungsbeispiel besitzen die Längsträger 2 und die Querträger 3 ein U-förmiges Querschnittsprofil. Die Spannklötze 45 (vgl. Fig.13) weisen an der ersten Außenseite 45a zwei durchgehend Nuten 49a, 49b auf, die an der dritten Außenseite 45b und der gegenüberliegende vierten Außenseite der quaderförmigen Spannklötze 45 ausmünden.

Im Bereich der vier Ecken sind die quaderförmigen Spannklötze 45 mit Bohrungen 51 versehen, die von der ersten Außenseite 45a bis zur gegenüberliegenden, plan ausgebildeten zweiten Außenseite durchgehen. Die Bohrungen 51 liegen außerhalb der Nuten 49a, 49b, deren Abstand im übrigen so bemessen ist, daß die beiden Stege des U-förmigen Querschnittsprofiles der Längs- und Querträger 2, 3 formschlüssig in diese Nuten eingreifen (vgl. Fig. 14).

Im Bereich eines Knotenpunktes der Längs- und Querträger 2, 3 werden jeweils zwei Spannklötze 45 so angeordnet, daß die Nutenseiten dieser Spannklötze einander zugewandt sind und die Nuten senkrecht zueinander stehen. In der aus Fig. 14 ersichtlichen Weise werden dann die Längs- und Querträger 2, 3 zusammengespannt, wobei jeweils zwei Spannklötze 45 durch zwei diagonal angeordnete Schrauben 7 mit aufgesetzten Muttern 9 zusammengehalten werden.

Bei dem Ausführungsbeispiel der Figuren 10 bis 14 besitzen auch die Leitungsträger 4 ein U-förmiges Querschnittsprofil. Zur Befestigung der Leitungen mittels der Leitungsträger 4 dienen weitere Spannklötze 46, die - ebenso wie die Spannklötze 45 - an einer Außenseite zwei zum formschlüssigen Eingriff der beiden Stege des U-förmigen Querschnittsprofiles der Querträger 3 bzw. der Leitungsträger 4 dienende, durchgehende Nuten aufweisen, die jedoch lediglich mit zwei außerhalb der beiden Nuten angeordneten Bohrungen zur Aufnahme von Schrauben 7 versehen sind (vgl. Figuren 10 bis 12).

## Patentansprüche

1. Isolierstoff-Halterung für elektrische Leitungen in Hochspannungsgeräten, insbesondere in flüssigkeitsgefüllten Transformatoren und Drosseln, enthaltend
   a) schienenförmige Längs- und Querträger (2, 3) aus Isolierstoff,
   b) schienenförmige Leitungsträger (4) aus Isolierstoff, die zusammen mit Längs- und/ oder Querträgern (2, 3) zum Festklemmen der Leitungen (1) dienen,
   c) mit sechs Außenseiten versehene Spannklötze (5, 6, 6'; 25, 26; 45, 46) aus Isolierstoff, die wenigstens eine durchgehende Bohrung (11, 13; 31; 51) aufweisen,
   d) Schrauben (7) und Muttern (8, 28a, 28b) zum Zusammenspannen von Längs- und Querträgern (2, 3), Leitungsträgern (4) und Spannklötzen (5, 6, 6'; 25, 26; 45, 46) in wählbarer Lage,
   gekennzeichnet durch folgende Merkmale:
   e) die Spannklötze (5, 6, 6'; 25, 26; 45, 46) sind quaderförmig ausgebildet;
   f) die aus Isolierstoff bestehenden Schrauben (7) und Muttern (8, 28a, 28b) pressen die Längs- und Querträger (2, 3) oder die Leitungsträger (4), die Leitungen (1) und die Längs- oder Querträger (2, 3) zwischen jeweils mindestens zwei formschlüssig an den Trägern (2, 3, 4) geführten Spannklötzen (5, 6, 6'; 25, 26; 45, 46) in wählbarer Lage zusammen.

2. Isolierstoff-Halterung nach Anspruch 1, dadurch gekennzeichnet, daß ein zwischen einem Längsträger (2) und einem Querträger (3) angeordneter Spannklotz (5) an der ersten und gegenüberliegenden zweiten Außenseite je zwei zum formschlüssigen Eingriff der Längs- oder Querträger (2, 3) dienende, durchgehende Nuten (9a, 9b, 10a, 10b) aufweist, von denen die an der ersten Außenseite (5a) vorgesehenen Nuten (9a, 9b) an der dritten und gegenüberliegenden vierten Außenseite und die an der zweiten Außenseite vorgesehenen Nuten (10a, 10b) an der fünften und gegenüberliegenden sechsten Außenseite des Spannklotzes ausmünden, wobei im Spannklotz (5) wenigstens eine von der ersten zur zweiten Außenseite durchgehende Bohrung (11) vorgesehen ist, die zwischen den auf derselben Außenseite befindlichen Nuten angeordnet ist.

3. Isolierstoff-Halterung nach Anspruch 2, gekennzeichnet durch quaderförmige Spannklötze (6, 6'), die an einer ersten Außenseite je zwei zum formschlüssigen Eingriff der Längs- oder Querträger (2, 3) dienende Ausnehmungen (12a, 12b bzw. 15a, 15b) aufweisen, die an der dritten und gegenüberliegenden vierten Außenseite ausmünden, während die der ersten Außenseite gegenüberliegende zweite Außenseite plan ausgebildet ist, und die gleichfalls mit wenigstens einer zwischen den beiden Ausnehmungen angebrachten, von der ersten zur zweiten Außenseite durchgehenden Bohrung (13) versehen sind.

4. Isolierstoff-Halterung nach Anspruch 2, dadurch gekennzeichnet, daß die schienenförmigen Längs- oder Querträger (2, 3) ein Rechteckprofil aufweisen.

5. Isolierstoff-Halterung nach Anspruch 2, dadurch gekennzeichnet, daß die schienenförmigen Längsträger (2') und/oder Querträger ein L-förmiges Winkelprofil aufweisen.

6. Isolierstoff-Halterung nach Anspruch 2, dadurch gekennzeichnet, daß die Nuten (9a, 9b) an der ersten Außenseite (5a) des Spannklotzes (5) rechtwinklig zu den Nuten (10a, 10b) an der gegenüberliegenden zweiten Außenseite verlaufen.

7. Isolierstoff-Halterung nach Anspruch 1, dadurch gekennzeichnet, daß die Spannklötze (25) an wenigstens zwei diagonal einander gegenüberliegenden Ecken durchgehende Bohrungen (31) aufweisen, wobei der Abstand dieser Bohrungen derart bemessen ist und auf den Schrauben (7) zwischen zwei Spannklötzen (25) angeordnete Vierkantmuttern (28a) so dimensioniert sind, daß die Längs- und Querträger (2, 3) formschlüssig zwischen diese Muttern (28a) eingreifen.

8. Isolierstoff-Halterung nach Anspruch 7, gekennzeichnet durch weitere, zur Befestigung der Leitungen (1) mittels der Leitungsträger (4) dienende, quaderförmige Spannklötze (26), die zwei durchgehende Bohrungen aufweisen, wobei der Abstand dieser Bohrungen derart bemessen ist und auf den Schrauben (7) zwischen zwei Spannklötzen angeordnete Vierkantmuttern (28a) so dimensioniert sind, daß die Querträger (3) formschlüssig zwischen diese Muttern (28a) eingreifen.

9. Isolierstoff-Halterung nach Anspruch 1, gekennzeichnet durch folgende Merkmale:
   a) Die Längs- und Querträger (2, 3) besitzen ein U-förmiges Querschnittsprofil;
   b) die Spannklötze (45) weisen an einer Außenseite zwei zum formschlüssigen Eingriff der beiden Stege des U-förmigen Querschnittsprofiles der Längs- oder Querträger dienende, durchgehende Nuten (49a, 49b) auf.

10. Isolierstoff-Halterung nach Anspruch 9, gekennzeichnet durch
   a) Leitungsträger (4) von U-förmigem Querschnittsprofil,
   b) zur Befestigung der Leitungen (1) mittels der Leitungsträger (4) dienende Spannklötze (46), die an einer Außenseite zwei zum formschlüssigen Eingriff der beiden Stege des U-förmigen Querschnittsprofiles der Querträger (3) bzw. der Leitungsträger (4) dienende, durchgehende Nuten aufweisen und die mit zwei außerhalb der beiden Nuten angeordneten Bohrungen versehen sind.

11. Isolierstoff-Halterung nach Anspruch 1, dadurch gekennzeichnet, daß die Isolierstoffteile aus vorzugsweise voll imprägnierbarem Transformerboard bestehen.


**Claims**

1. Holder made from insulating material for electrical conductors in high-tension devices, particularly fluid- filled transformers and throttles, containing
   a) bar-shaped longitudinal and transverse carriers (2, 3) made from insulating material,
   b) bar-shaped conductor carriers (4) made from insulating material which together with longitudinal and/or transverse carriers (2, 3) serve to clamp the conductors (1),
   c) gripping blocks (5, 6, 6'; 25, 26; 45, 46) made from insulating material which are provided with six outer faces and have at least one through bore (11, 13; 31; 51),
   d) screws ( 7) and nuts (8, 28a, 28b) for clamping together longitudinal and transverse carriers (2, 3) conductor carriers (4) and gripping blocks (5, 6, 6'; 25, 26; 45, 46) in any chosen position,
   characterised by the following features:
   e), the gripping blocks (5, 6, 6'; 25, 26; 45, 46) are of square construction;
   f) the screws (7) and nuts (8, 28a, 28b) made from insulating material press together in any chosen position the longitudinal and transverse carriers (2, 3) or the conductor carriers (4), the conductors (1) and the longitudinal or transverse carriers (2, 3) between at least two gripping blocks (5, 6, 6'; 25, 26; 45, 46) which are guided in each case in a form- locking manner on the carriers (2, 3, 4).

2. Holder made from insulating material as claimed in claim 1, characterised in that a gripping block (5) arranged between a longitudinal carrier (2) and a transverse carrier (3) has on each of the first and opposing second outer faces two continuous grooves (9a, 9b, 10, 10b) which serve for the form-locking engagement of the longitudinal or transverse carriers (2, 3) and of which the grooves (9a, 9b) provided on the first outer face (5a) open on the third and opposing fourth outer faces and the grooves (10a, 10b) provided on the second outer face open on the fifth and opposing sixth outer faces of the gripping block (5), and at least one bore (11) is provided which passes through from the first to the second outer face and is arranged between the grooves located on the same outer face.

3. Holder made from insulating material as claimed in claim 2, characterised by square gripping blocks (6, 6') which each have on a first outer face two recesses (12a, 12b and 15a, 15b respectively) which serve for the form- locking engagement of the longitudinal or transverse carriers (2, 3) and open an the third and opposing fourth outer faces, the second outer face opposite the first outer face being of flat construction, and which are also provided with at least one bore (13) which passes through from the first to the second outer face and is arranged between the two recesses.

4. Holder made from insulating material as claimed in claim 2, characterised in that the bar-shaped longitudinal or transverse carriers (2, 3) have a rectangular profile.

5. Holder made from insulating material as claimed in claim 2, characterised in that the bar-shaped longitudinal carriers (2') and/or transverse carriers have an L-shaped angular profile.

6. Holder made from insulating material as claimed in claim 2, characterised in that the grooves (9a, 9b) on the first outer face (5a) of the gripping block (5) run at right angles to the grooves (10a, 10b) on the opposing second outer face.

7. Holder made from insulating material as claimed in claim 1, characterised in that the gripping blocks (25) have through bores (31) on at least two diagonally opposing corners, and the spacing of these bores is dimensioned and based an the square nuts (28a) arranged on the screws (7) between two gripping blocks (25) in such a way that the longitudinal and transverse carriers (2, 3) engage in a form-locking manner between these nuts (28a).

8. Holder made from insulating material as claimed in claim 7, characterised by further square gripping blocks (26) which serve for fixing the conductors (1) by means of the conductor carriers (4) and have two through bores, and the spacing of these bores is dimensioned and based on the square nuts (28a) arranged on the screws (7) between two gripping blocks in such a way that the transverse carriers (3) engage in a form-locking manner between these nuts (28a).

9. Holder made from insulating material as claimed in claim 1, characterised by the follwing features:

a) the longitudinal and transverse carriers (2, 3) have a U-shaped cross-sectional profile.

b) the gripping blocks (45) have on one outer face two continuous grooves (49a, 49b) which serve for the form-locking engagement af the two arms of the U-shaped cross-sectional profile of the longitudinal or transverse carriers.

10. Holder made from insulating material as claimed in claim 9, characterised by

a) conductor carriers (4) of U-shaped cross-sectional profile:

b) gripping blocks (46) which serve for fixing the conductors (1) by means of the conductor carriers (4), have on one outer face two continuous grooves serving for the form-lockng engagement of the two arms of the U-shaped cross-sectional profile of the transverse carriers (3) or the conductor carriers (4), and are provided with two bores arranged outside the two grooves.

11. Holder made from insulating material as claimed in claim 1, characterised in that the insulating parts are preferably made from fully-impregnated transformer board.


**Revendications**

1. Dispositif de support en matériau isolant pour conducteurs électriques situés dans des appareillages haute tension, en particulier dans des transformateurs et bobines de self remplis de liquide, comprenant:

a) des longerons et des traverses (2, 3) en forme de barres et en matériau isolant,

b) des supports (4) de conducteurs en matériau isolant, en forme de barres, qui sont destinés à l'immobilisation des conducteurs (1) avec les longerons et/ou les traverses (2, 3),

c) des blocs de fixation (5, 6, 6' ; 25, 26 ; 45, 46) en matériau isolant, comportant six côtés extérieurs et comprenant au moins un trou (11, 13; 31, 51) les traversant de part en part,

d) des boulons (7) et des écrous (8, 28a, 28b) de fixation par serrage des longerons et traverses (2, 3), des supports (4) de conducteurs et des blocs de fixation (5, 6, 6'; 25, 26; 45, 46) en position sélectionnable,

caractérisé par les particularités suivantes:

e) les blocs de fixation (5, 6, 6'; 25, 26; 45, 46) sont parallélépipédiques;

f) les boulons (7) et écrous (8, 28a, 28b) en matériau isolant compriment les uns contre les autres par serrage, en position sélectionnable, les longerons et traverses (2, 3) ou les supports (4) de conducteurs, les conducteurs 1 et les longerons ou les traverses (2, 3) entre au moins deux blocs de fixation (5, 6, 6' ; 25, 26 ; 45, 46) guidés par complémentarité de formes sur les longerons, les traverses et les supports (2, 3, 4).

2. Dispositif de support isolant selon la revendication 1, caractérisé en ce qu'un bloc de fixation (5) disposé entre un longeron (2) et une traverse (3) comporte sur chacun des premier et second côtés extérieurs situés à l'opposé l'un de l'autre deux rainures continues (9a, 9b, 10a, 10b) destinées à loger par complémentarité de formes les longerons ou les traverses (2, 3) et dont celles (9a, 9b) qui sont prévues sur le premier côté extérieur (5a) débouchent sur le troisième côté extérieur et sur le quatrième situé à l'opposé, tandis que les rainures (10a, 10b) situées sur le second côté extérieur débouchent sur le cinquième côté extérieur du bloc de fixation et sur le sixième côté situé à l'opposé, le bloc de fixation (5) comportant au moins un trou (11) le traversant de part en part du premier au second côté extérieur et disposé entre les rainures se trouvant sur le même côté extérieur.

3. Dispositif de support isolant selon la revendication 2, caractérisé par des blocs de fixation parallélépipédiques (6, 6') comportant sur un premier côté extérieur deux évidements (12a, 12b ainsi que 15a, 15b) destinés à loger par complémentarité de formes les longerons ou les traverses (2, 3), ces évidements débouchant sur le troisième côté extérieur ainsi que sur le quatrième situé à l'opposé, tandis que le second côté extérieur situé à l'opposé du premier est plan, lesdits blocs de fixation (6, 6') comportant également au moins un trou (13) les traversant de part en part, du premier au second côté extérieur, et situé entre les deux évidements.

4. Dispositif de support isolant selon la revendication 2, caractérisé en ce que les longerons ou les traverses (2, 3) en forme de barres ont un profil rectangulaire.

5. Dispositif de support isolant selon la revendication 2, caractérisé en ce que les longerons (2') et/ou les traverses en forme de barres ont un profil en cornière.

6. Dispositif de support isolant selon la revendication 2, caractérisé en ce que les rainures (9a, 9b) situées sur le premier côté extérieur (5a) du bloc de fixation (5) sont perpendiculaires aux rainures (10a, 10b) situées sur le second côté extérieur se trouvant à l'opposé.

7. Dispositif de support isolant selon la revendication 1, caractérisé en ce que les blocs de fixation (25) comportent à au moins deux angles diagonalement opposés des trous (31) qui les traversent de part en part, la distance séparant ces trous étant calculée de manière que, et les écrous (28a) à quatre pans montés sur les boulons (7) entre deux blocs de fixation (25) étant dimensionnés de manière que les longerons et les traverses (2, 3) se logent par complémentarité de formes entre ces écrous (28a).

8. Dispositif de support isolant selon la revendication 7, caractérisé par d'autres blocs parallélépipédiques de fixation (26) destinés à l'immobilisation des conducteurs (1) au moyen des supports (24) et comportant deux trous les traversant de part en part, la distince séparant ces trous étant calculée de manière que, et les écrous à quatre pans (28a) montés sur les boulons (7) entre deux blocs étant dimensionnés de manière que les traverses (3) se logent par complémentarité de formes entre ces écrous (28a).

9. Dispositif de support isolant selon la revendication 1, caractérisé par les particularités suivantes:

a) les longerons et les traverses (2, 3) ont un profil transversal en étrier:

b) les blocs de fixation (45) comportent sur un côté extérieur deux rainures continues (49a, 49b) destinées à loger par complémentarité de formes les deux ailes du longeron ou de la traverse au profil transversal en étrier.

10. Dispositif de support isolant selon la revendication 9, caractérisé par:

a) des supports (4) de conducteurs qui ont un profil transversal en étrier,

b) des blocs (46) de fixation des conducteurs (1) au moyen des supports (4), ces blocs comportant sur un côté extérieur deux rainures continues de logement par complémentarité de formes des deux ailes des traverses (3) ou des supports (4) de conducteurs qui ont un profil transversal en étrier, ces blocs comportant par ailleurs deux trous disposés à l'extérieur des deux rainures.

11. Dispositif de support isolant selon la revendication 1, caractérisé en ce que les pièces de matériau isolant sont de préférence réalisées dans des panneaux pour transformateurs qui sont totalement imprégnables.

FIG.1

FIG. 5

FIG. 2

1

# FIG. 3

# FIG. 4

FIG 6

FIG 7

FIG. 8

FIG. 9

FIG. 10

FIG. 12

FIG. 11

FIG. 13

FIG. 14